(19) Europäisches Patentamt
European Patent Office
Office européen des brevets

(11) **EP 1 360 792 B1**

## (12) EUROPÄISCHE PATENTSCHRIFT

(45) Veröffentlichungstag und Bekanntmachung des Hinweises auf die Patenterteilung:
**07.11.2007 Patentblatt 2007/45**

(21) Anmeldenummer: **02704573.1**

(22) Anmeldetag: **10.01.2002**

(51) Int Cl.:
***H04L 7/04*** *(2006.01)*

(86) Internationale Anmeldenummer:
**PCT/DE2002/000063**

(87) Internationale Veröffentlichungsnummer:
**WO 2002/065689 (22.08.2002 Gazette 2002/34)**

(54) **EINHEIT ZUR BESTIMMUNG DER ABTASTPHASE**

UNIT FOR DETERMINING THE SAMPLING PHASE

UNITE POUR DETERMINER LA PHASE D'ECHANTILLONNAGE

(84) Benannte Vertragsstaaten:
**DE FR GB IT**

(30) Priorität: **15.02.2001 DE 10107144**

(43) Veröffentlichungstag der Anmeldung:
**12.11.2003 Patentblatt 2003/46**

(73) Patentinhaber: **Infineon Technologies AG**
**81669 München (DE)**

(72) Erfinder:
• **HAMMES, Markus**
**46539 Dinslaken (DE)**
• **KRANZ, Christian**
**40885 Ratingen Lintorf (DE)**
• **VAN DEN BOOM, Johannes**
**40670 Meerbusch (DE)**

(74) Vertreter: **Lange, Thomas et al**
**Patentanwälte**
**Lambsdorff & Lange**
**Dingolfinger Strasse 6**
**81673 München (DE)**

(56) Entgegenhaltungen:
**GB-A- 2 206 267      US-A- 4 414 676**
**US-A- 4 984 249      US-A- 5 699 389**
**US-A- 6 118 833**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 360 792 B1

**Beschreibung**

Die Erfindung betrifft eine Vorrichtung sowie ein Verfahren zur Ermittlung und Nachführung des optimalen Abtastzeitpunkts für einen überabgetasteten digitalen Bitstrom.

Bei schnurlosen Kommunikationssystemen werden die Daten in Form einer Rahmenstruktur übermittelt. Vor der Übertragung der Datenpakete werden Synchronisationsworte übermittelt, die empfängerseitig bekannt sind. Synchronisationswort und Datenpaket zusammen ergeben einen Datenburst. Das Synchronisationswort zu Beginn des Bursts wird zum einen dazu verwendet, den Burst zu identifizieren. Zum anderen kann mittels dieses Synchronisationsworts die optimale Abtastphase für den empfangenen Bitstrom bestimmt werden. Bei Vorliegen eines digitalen Modulationsverfahrens wird diese Abtastphase so gewählt, dass jeweils in der Mitte der Symboldauer und somit bei der maximalen Öffnung des Augendiagramms abgetastet wird.

Nach der Demodulation liegt empfängerseitig ein pulsamplitudenmoduliertes Empfangssignal vor, welches die binären Daten kodiert. Dieses Empfangssignal wird einem Komparator zugeführt, der je nachdem, ob das Empfangssignal kleiner oder größer als Null ist, an seinem Ausgang den Wert 0 oder den Wert 1 liefert. Die eigentliche Umwandlung des Empfangssignals in eine Folge diskreter Werte erfolgt durch periodische Abtastung des Komparatorausgangs.

Zur Bestimmung des optimalen Abtastzeitpunkts ist es von Vorteil, das Ausgangssignal des Komparators mehrmals innerhalb der Symboldauer mit einem bestimmten Überabtastverhältnis (OSR, Oversampling Ratio) abzutasten. Pro Datensymbol werden auf diese Weise $n$ verschiedene Abtastwerte ermittelt. Von diesen Abtastwerten wird nur jeweils der zum optimalen Abtastzeitpunkt gehörige Wert weiterverarbeitet, die restlichen $(n-1)$ Werte werden ignoriert.

Zur Bestimmung des optimalen Abtastzeitpunkts ist es bekannt, zu Beginn des Empfangs eines Datenbursts die überabgetasteten binären Daten mit dem empfängerseitig bekannten Synchronisationswort zu vergleichen. Dies erfolgt mittels eines Korrelators, der den Eingangsdatenstrom mit dem Synchronisationswort bitweise vergleicht und einen zugehörigen Korrelationswert ermittelt. Bei ungestörten Empfangssignalen liegt das erstmalige und letztmalige Auftreten von Korrelation zu Beginn bzw. am Ende einer Symboldauer, und der Abtastzeitpunkt wird in der Mitte zwischen diesen beiden Zeitpunkten gewählt.

Nachteilig an dieser Lösung ist, dass die Bestimmung der optimalen Abtastphase nur einmal für jeden Datenburst durchgeführt wird, und zwar zu Beginn des Empfangs des Datenbursts. Die anfangs ermittelte Abtastphase wird dann zur Abtastung des gesamten Datenbursts verwendet. Mögliche Signalstörungen zu Beginn eines Bursts führen dazu, dass die Abtastphase anfangs fehlerhaft festgelegt wird. Diese fehlerhafte Abtastphase wird dann zur Abtastung des gesamten Datenbursts verwendet, und es ergeben sich hohe Bitfehlerraten. Ein weiterer Nachteil ist, dass eine mögliche Drift der Zeitreferenzen von Sender und Empfänger nicht durch Nachführung der Abtastphase kompensiert werden kann, denn die anfangs festgelegte Abtastphase bleibt jeweils für einen ganzen Datenburst konstant.

Die Druckschrift US-A-5 699 389 beschreibt eine Vorrichtung zur Ermittlung des optimalen Abtastzeitpunkts für einen $n$-fach überabgetasteten digitalen Bitstrom. Das überabgetastete Signal wird hierbei $n$ parallel zueinander angeordneten Korrelatoren zugeleitet und jeweils mit einem bekannten Synchronisationswort korreliert. Durch eine Auswertung der erhaltenen Korrelationsergebnisse in einem Entscheidungsblock wird der optimale Abtastzeitpunkt ermittelt.

Aufgabe der Erfindung ist es daher, eine Vorrichtung sowie ein Verfahren zur Ermittlung und Nachführung des optimalen Abtastzeitpunkts für einen überabgetasteten Bitstrom zur Verfügung zu stellen, wobei die Bitfehlerrate verglichen mit dem Stand der Technik weiter abgesenkt wird.

Diese Aufgabe wird durch eine Vorrichtung zur Ermittlung und Nachführung des optimalen Abtastzeitpunkts gemäß Anspruch 1 sowie durch ein Verfahren gemäß Anspruch 12 gelöst.

Ausgegangen wird von einem überabgetasteten digitalen Bitstrom, wobei pro Bit zu $n$ verschiedenen Abtastzeitpunkten aufgenommene Abtastwerte vorliegen. Die erfindungsgemäße Vorrichtung zur Ermittlung und Nachführung des optimalen Abtastzeitpunkts umfasst eine Ausleseeinheit, welche aus dem überabgetasteten digitalen Bitstrom jeweils zum optimalen Abtastzeitpunkt das nächstfolgende Bit ausliest sowie einer Folge von Schieberegistern mit jeweils $n$ Registerzellen. Außerdem umfasst die Vorrichtung eine Einheit zur Ermittlung der Korrelation zwischen den Bits aus jeweils einer Registerzelle der Schieberegister aus der Folge von Schieberegistern einerseits und einer Vergleichsfolge andererseits. Der neue optimale Abtastzeitpunkt wird durch eine Einheit zur Bestimmung des neuen optimalen Abtastzeitpunkts in Abhängigkeit von den zu den verschiedenen Abtastzeitpunkten ermittelten Korrelationswerten festgelegt.

Der überabgetastete digitale Eingangsbitstrom wird durch die Folge von Schieberegistern geschoben, wobei jedes Schieberegister $n$ Registerzellen zur Aufnahme der $n$ pro Bit vorhandenen Abtastwerte aufweist. Beispielsweise existieren bei einer Oversampling Ratio von 9 zu jedem Datensymbol des Eingangsbitstroms 9 Abtastwerte. Entsprechend gilt für das Verhältnis der Samplezeit $T_S$ und der Symboldauer $T_{Bit}$ im Fall einer neunfachen Überabtastung

$$T_S = \frac{T_{Bit}}{9}.$$

Zur Aufnahme der 9 pro Bit aufgenommenen Abtastwerte müssen Schieberegister mit jeweils 9 Registerzellen vorgesehen werden. Zur Abspeicherung einer Folge von beispielsweise 16 Datensymbolen des Eingangsbitstroms sind entsprechend 16 hintereinander geschaltete Schieberegister mit jeweils neun Registerzellen notwendig. Anstelle der Folge von 16 Schieberegistern kann auch ein großes Schieberegister mit 16 · 9 = 144 Registerzellen verwendet werden. Die Folge von Schieberegistern wird so getaktet, dass jeweils nach Ablauf einer Samplezeit $T_S$ der Schieberegisterinhalt um eine Position weiter geschoben wird.

Die Speicherung der Abtastwerte des überabgetasteten digitalen Eingangsbitstroms in einer derartigen Folge von Schieberegistern der Länge n ermöglicht eine einfache Bestimmung des optimalen Abtastzeitpunkts beziehungsweise der optimalen Abtastphase. Dazu wird festgelegt, aus welcher der n pro Datensymbol vorgesehenen Registerzellen das Auslesen des aktuellen Bits erfolgen soll. Wenn beispielsweise bei einer Over-sampling Ratio von 9 jeweils die dritte Registerzelle von jedem Schieberegister ausgelesen wird, so ist damit die Abtastphase relativ zum Eingangsbitmuster festgelegt. Eine Veränderung der zum Auslesen verwendeten Abtastphase ist auf einfache Weise möglich, indem beispielsweise statt der dritten jeweils die vierte oder fünfte Registerzelle des jeweiligen Schieberegisters zum Auslesen des aktuellen Bits herangezogen wird.

Anders als im Stand der Technik wird als Vergleichsfolge ein durchlaufendes Bitmuster verwendet, wobei in die Vergleichsfolge jeweils das zum optimalen Abtastzeitpunkt ausgelesene Bit eingespeist wird. Während im Stand der Technik das zu Beginn des Datenbursts übermittelte Synchronisationswort als Vergleichsfolge verwendet wird, wird die Vergleichsfolge bei der erfindungsgemäßen Lösung durch Auswertung des empfangenen Datenstroms erzeugt. Das aktuell ausgelesene Datenbit dient jeweils zum Update der Vergleichsfolge. Durch Korrelieren dieser Vergleichsfolge mit dem überabgetasteten Eingangsdatenstrom kann ein neuer optimaler Abtastzeitpunkt ermittelt werden. Das Auslesen des nächstfolgenden Bits durch die Ausleseeinheit kann dann bereits zu dem neu bestimmten optimalen Abtastzeitpunkt erfolgen. Auch dieses Bit wird wieder in die Vergleichsfolge eingespeist, so dass im Umlaufverfahren eine ständige Neubestimmung und Nachführung des optimalen Abtastzeitpunkts ermöglicht wird.

Ein Vorteil der erfindungsgemäßen Lösung ist, dass die Ermittlung der optimalen Abtastphase zu jedem beliebigen Zeitpunkt innerhalb des Datenbursts durchgeführt werden kann.

Während im Stand der Technik die optimale Abtastphase durch Korrelation mit dem anfänglich übertragenen Synchronisationswort ermittelt wurde und deshalb nur zu Beginn des Datenbursts festgelegt werden konnte, erlaubt die erfindungsgemäße Lösung die Bestimmung des optimalen Abtastzeitpunkts an beliebiger Stelle innerhalb des Datenbursts. Dadurch ist es insbesondere möglich, den optimalen Abtastzeitpunkt mehrmals während eines Datenbursts zu bestimmen. Insofern erlaubt die Erfindung eine kontinuierliche Neubestimmung und Nachführung des optimalen Abtastzeitpunkts während des Empfangs eines Datenbursts. Dadurch kann die Bitfehlerrate signifikant abgesenkt werden.

Eine mögliche Signalstörung zu Beginn der Übertragung des Datenbursts kann eine fehlerhafte Anfangsfestsetzung des optimalen Abtastzeitpunkts bewirken. Die erfindungsgemäße Lösung ermöglicht es, den fehlerhaften Abtastzeitpunkt noch während des Empfangs des Datenbursts zu korrigieren. Dadurch kann der Rest des Datenbursts korrekt empfangen werden.

Eine kontinuierliche Nachführung der Abtastphase ist insbesondere bei einer Drift zwischen den Zeitreferenzen von Sender und Empfänger von Vorteil. Eine derartige Drift führt dazu, dass eine anfangs korrekt bestimmte Abtastphase nach kurzer Zeit zu fehlerhaften Ausleseergebnissen führt. Die erfindungsgemäße Nachführung des optimalen Abtastzeitpunkts erlaubt dagegen auch bei einer Taktdrift zwischen Sender und Empfänger gute Ausleseergebnisse, da die Abtastphase entsprechend der Drift verändert wird.

Aus dem Stand der Technik ist Hardware zur Bestimmung der Abtastphase bekannt, bei denen die Korrelation des Eingangsdatenstroms mit dem Synchronisationswort für verschiedene Abtastphasen ermittelt wird, um die optimale Abtastphase zu finden. Um ausgehend von dieser vorbekannten Hardware zu einer entsprechend der Erfindung arbeitenden Hardware zu gelangen, muss lediglich die konstante Vergleichsfolge durch ein durchlaufendes Bitmuster ersetzt werden, in das jeweils das neu ausgelesene Bit eingespeist wird. Die hierfür erforderlichen baulichen Veränderungen der vorbekannten Hardware sind minimal. Insofern kann mit geringem baulichen Mehraufwand eine Einheit zur Bestimmung der Abtastphase realisiert werden, welche eine ständige Nachführung der Abtastphase erlaubt.

Gemäß einer vorteilhaften Ausführungsform der Erfindung ist die Vergleichsfolge in einem Vergleichsfolge-Schieberegister abgelegt, wobei in das Vergleichsfolge-Schieberegister jeweils das zum optimalen Abtastzeitpunkt ausgelesene Bit eingespeist wird. Dies stellt die geeignetste Hardware-Implementierung zur Speicherung eines durchlaufenden Bitmusters dar. In das Schieberegister wird jeweils das zum optimalen Abtastzeitpunkt ausgelesene Bit eingespeist, so dass das Schieberegister ständig die aktuelle Vergleichsfolge enthält. Das Schieberegister wird dabei so getaktet, dass jeweils nach einer Symboldauer $T_{Bit}$ eine Verschiebung des Bitmusters erfolgt. Der Schieberegisterinhalt wird mit dem eintreffenden digitalen Bitstrom korreliert, um zu jedem Abtastzeitpunkt einen zugehörigen Korrelationswert zu ermitteln.

Es ist von Vorteil, wenn der optimale Abtastzeitpunkt mehrmals während eines Datenbursts bestimmt wird. Dadurch wird eine kontinuierliche Nachführung der optimalen Abtastphase ermöglicht. Insbesondere im Fall einer Taktdrift zwischen dem sender- und empfängerseitigen Referenztakt kann auf diese Weise gewährleistet werden, dass die Abtastung des Eingangssignals jeweils etwa in der Mitte des empfangenen Datensymbols erfolgt.

Dabei ist es insbesondere von Vorteil, wenn der optimale Abtastzeitpunkt mehrmals während eines Datenbursts in periodischen Abständen bestimmt wird. Beispielsweise kann festgelegt sein, dass jeweils nach dem Empfang von 20 Datensymbolen eine Neubestimmung des optimalen Abtastzeitpunkts erfolgt.

Es ist von Vorteil, wenn jeweils zu Beginn des Empfangs eines Datenbursts die Vergleichsfolge gleich einem Synchronisationswort gesetzt wird. Das Synchronisationswort wird jeweils zu Beginn eines Datenbursts übertragen und ist empfängerseitig bekannt. Insofern kann die erstmalige Bestimmung der Abtastphase durch Korrelieren des Eingangsdatenstroms mit dem vorbekannten Synchronisationswort erfolgen. Sobald die Abtastphase erstmalig bestimmt ist, können die nächstfolgenden Bits des Bitstroms entsprechend dieser Abtastphase ausgelesen werden. Die so erhaltenen Datenbits werden dann nacheinander in die Vergleichsfolge eingespeist und zur Bestimmung des neuen optimalen Abtastzeitpunkts herangezogen.

Gemäß einer weiteren vorteilhaften Ausführungsform der Erfindung erfolgt die Variation des optimalen Abtastzeitpunkts nur innerhalb eines vorgegebenen Intervalls um den bisherigen optimalen Abtastzeitpunkt. Wenn die Nachregelung beispielsweise in Folge von stark gestörten Datenbits immer wieder fehlerhafte Vergleichsmuster erhält, so kann sich bei der Neubestimmung der Abtastphase ein fehlerhafter Wert ergeben, der stark von der bisher verwendeten Abtastphase abweicht. Um dies zu verhindern, wird die Nachregelung des Abtastzeitpunkts $t_{adjust}$ auf einen bestimmten Bereich um den bisher verwendeten Abtastzeitpunkt $t_{opt}$ eingeschränkt. Mit dieser Maßnahme kann ein "Ausbrechen" der Abtastphase aus dem plausiblen Intervall vermieden werden.

Es ist von Vorteil, wenn die Einheit zur Ermittlung der Korrelation jeweils die Hamming-Distanz zwischen der zu einem bestimmten Abtastzeitpunkt gehörigen Folge von abgetasteten Datenbits und der Vergleichsfolge bestimmt. Die Hamming-Distanz gibt an, in wie vielen Bits sich die Folge von abgetasteten Datenbits und die Vergleichsfolge voneinander unterscheiden. Eine Hamming-Distanz von Null bedeutet insofern, dass die Folge von abgetasteten Datenbits und die Vergleichsfolge identisch sind. Eine Hamming-Distanz von 1 bedeutet, dass sich die Folge von abgetasteten Datenbits in genau einem Bit von der Vergleichsfolge unterscheidet, während alle anderen Bits der beiden Folgen übereinstimmen. Wenn beispielsweise zwei jeweils 16 Bit umfassende Folgen eine Hamming-Distanz von 1 oder 2 zueinander aufweisen, dann sind die beiden Folgen stark korreliert. Insofern stellt die Hamming-Distanz zwischen der Folge von abgetasteten Datenbits und der Vergleichsfolge ein gutes Maß für die Korrelation der beiden Folgen dar. Darüber hinaus stehen geeignete Hardwarelösungen zur Verfügung, mit denen die Hamming-Distanz zweier Folgen mit geringem Aufwand berechnet werden kann.

Es ist von Vorteil, wenn die Einheit zur Ermittlung der Korrelation die jeweils ermittelte Hamming-Distanz mit einem vorgegebenen Schwellwert vergleicht und für den Fall, dass der Schwellwert unterschritten ist, ein zugehöriges Korrelationsflag setzt. Wenn beispielsweise infolge von Bitfehlern einzelne Bits der beiden zu vergleichenden Sequenzen voneinander abweichen, dann ergibt sich eine Hamming-Distanz von ungleich Null. Dennoch sind die beiden Folgen stark korreliert. Bei der erfindungsgemäßen Lösung wird das Vorhandensein von Korrelation zwischen den beiden Folgen dann bejaht, wenn die Hamming-Distanz einen vorgegebenen Schwellwert unterschreitet. Dies führt zu besseren Ergebnissen, als wenn die vollständige Identität beider Folgen gefordert würde.

Gemäß einer vorteilhaften Ausführungsform der Erfindung ermittelt die Einheit zur Bestimmung des neuen optimalen Abtastzeitpunkts den neuen optimalen Abtastzeitpunkt durch Betrachtung des Abtastzeitintervalls, innerhalb dessen die Hamming-Distanz den vorgegebenen Schwellwert unterschreitet. Wegen der Überabtastung existieren zu jedem Datensymbol des Eingangsdatenstroms mehrere (im Beispielsfall 9) verschiedene Abtastwerte. Für jeden Abtastzeitpunkt wird eine Korrelation der erhaltenen Abtastwerte mit der Vergleichsfolge durchgeführt. Wenn Korrelation vorliegt, wenn also die Hamming-Distanz den vorgegebenen Schwellwert unterschreitet, so wird ein zugehöriges Korrelationsflag gesetzt. Wenn man die Folge der zu den verschiedenen Abtastzeitpunkten gehörigen Korrelationsflags betrachtet, so kann der Abtastzeitpunkt ermittelt werden, bei dem zum ersten Mal Korrelation vorliegt. Entsprechend kann der Abtastzeitpunkt ermittelt werden, bei dem die Eingangsdatenfolge und die Vergleichsfolge zum letzten Mal hinreichend korreliert sind. Durch den Zeitpunkt erstmaliger Korrelation und den Zeitpunkt letztmaliger Korrelation wird ein Abtastzeitintervall festgelegt, innerhalb dem die Hamming-Distanz den vorgegebenen Schwellwert unterschreitet. Durch Analyse dieses Abtastzeitintervalls kann der neue optimale Abtastzeitpunkt bestimmt werden.

Dabei ist es insbesondere von Vorteil, wenn ein in der Mitte des Abtastzeitintervalls befindlicher Zeitpunkt als neuer optimaler Abtastzeitpunkt gewählt wird. Bei einer derartigen Wahl des Abtastzeitpunkts ist sichergestellt, dass die Bits des eingehenden Datenstroms jeweils in der Mitte abgetastet werden.

Bei dem erfindungsgemäßen Verfahren zur Ermittlung und Nachführung des optimalen Abtastzeitpunkts für einen überabgetasteten digitalen Bitstrom, wobei pro Bit zu n verschiedenen Abtastzeitpunkten aufgenommene Abtastwerte vorliegen, wird zunächst das nächstfolgende Bit aus dem überabgetasteten digitalen Bitstrom zum bisherigen optimalen Abtastzeitpunkt ausgelesen, wobei der überabgetastete digitale Bitstrom durch eine Folge von Schieberegistern geschoben wird, wobei jedes Schieberegister n Registerzellen zur Aufnahme der n pro Bit vorhandenen Abtastwerte aufweist. Das ausgelesene Bit wird in die Vergleichsfolge, welche als durchlaufendes Bitmuster abgelegt ist, eingespeist. Anschließend wird die Korrelation zwischen der Folge von abgetasteten Datenbits und der Vergleichsfolge ermittelt, wobei zu jedem Abtastzeitpunkt ein zugehöriger Korrelationswert ermittelt wird. Aus den zu den verschiedenen Abtastzeitpunkten ermittelten Korrelationswerten wird dann ein neuer optimaler Abtastzeitpunkt bestimmt.

Bisher wurde als Vergleichsfolge das empfängerseitig bekannte Synchronisationswort verwendet. Bei einer derartigen Wahl der Vergleichsfolge war es nur möglich, die optimale Abtastphase zu Beginn eines Datenbursts festzulegen. Bei der erfindungsgemäßen Lösung wird die Vergleichsfolge jeweils um das aktuell ausgelesene Bit ergänzt. Dadurch kann eine Neubestimmung des optimalen Abtastzeitpunkts auch innerhalb eines Datenbursts vorgenommen werden. Auf diese Weise lässt sich eine kontinuierliche Nachführung der Abtastphase realisieren, und dies führt zu einer deutlich reduzierten Bitfehlerrate.

Nachfolgend wird die Erfindung anhand eines in der Zeichnung dargestellten Ausführungsbeispiels weiter beschrieben. Es zeigen:

Fig. 1    eine Einheit zur Bestimmung der optimalen Abtastphase für einen überabgetasteten Bitstrom gemäß dem Stand der Technik; und

Fig. 2    die erfindungsgemäße Einheit zur Ermittlung der optimalen Abtastphase für einen überabgetasteten Bitstrom.

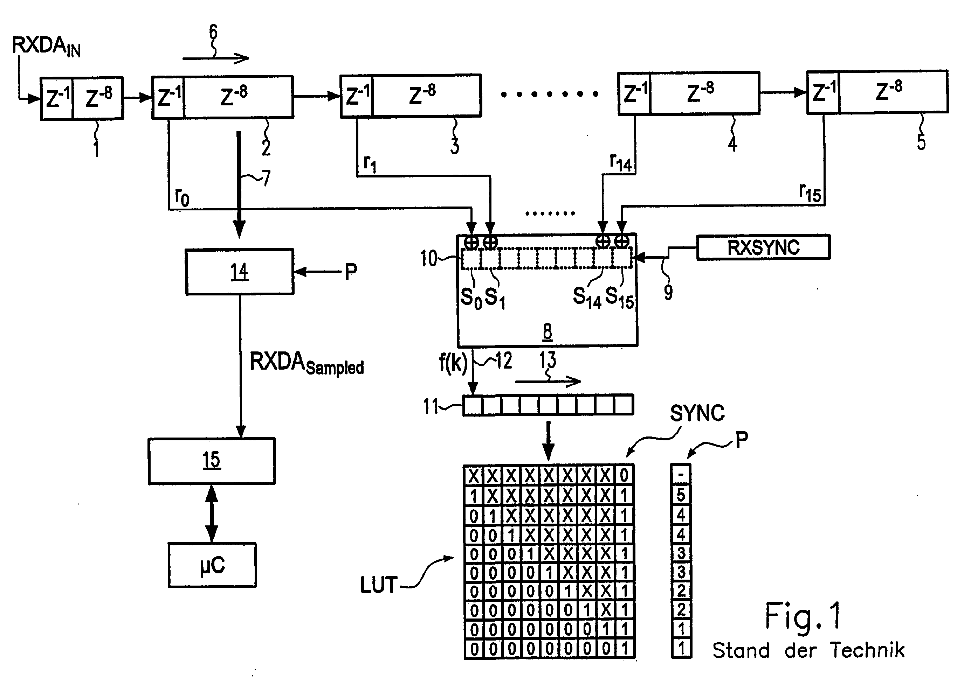

In Fig. 1 ist eine Einheit zur Bestimmung der Abtastphase gemäß dem Stand der Technik gezeigt, bei der die Abtastphase zu Beginn eines Datenbursts für den gesamten Datenburst festgelegt wird. Dazu wird der Eingangsdatenstrom mit dem empfängerseitig bekannten Synchronisationswort korreliert, um aus dem Korrelationsergebnis die optimale Abtastphase herzuleiten.

Hierzu wird das pulsamplitudenmodulierte Empfangssignal mehrmals innerhalb einer Symboldauer $T_{Bit}$ entsprechend einem bestimmten Überabtastverhältnis (OSR, Oversampling Ratio) abgetastet, um so n Abtastwerte pro empfangenem Datensymbol zu erhalten. In dem in Fig. 1 gezeigten Beispiel gilt n = 9, das heißt es liegen zu jedem Datensymbol 9 Abtastwerte vor.

Der überabgetastete digitale Bitstrom $RXDA_{IN}$ wird durch eine Anordnung von seriell geschalteten Schieberegistern 1, 2, ..., 5 geschoben, wobei die Taktfrequenz der Schieberegister durch $\frac{1}{T_S}$ gegeben ist. Hierbei bezeichnet $T_S$ die Samplezeit, also das Zeitintervall zwischen zwei Abtastwerten. Jedes der Schieberegister 1, 2,..., 5 umfasst n = 9 verschiedene Schieberegisterzellen zur Aufnahme der digitalisierten Abtastwerte. Die Vorschubrichtung der Schieberegister ist durch den Pfeil 6 gekennzeichnet.

In jedem der Schieberegister 1, 2,..., 5 finden sich die Bezeichnungen $Z^{-1}$ sowie $Z^{-8}$. $Z^{-1}$ bezeichnet eine Verzögerung um eine Samplezeit $T_S$ und entsprechend bezeichnet $Z^{-8}$ eine Verzögerung um acht Samplezeiten $8 \cdot T_S$. Insgesamt bewirkt daher jedes der Schieberegister 1, 2,..., 5 eine Verzögerung um 9 Samplezeiten, beziehungsweise (wegen $9 \cdot T_S = T_{Bit}$) um eine Symbolzeit $T_{Bit}$.

Die aus den Schieberegistern 1, 2,..., 5 bestehende Schieberegisteranordnung ermöglicht eine einfache Festlegung der Abtastphase, indem eine der n Schieberegisterzellen des Schieberegisters 2 ausgewählt wird, aus der dann der nächstfolgende Datensymbolwert ausgelesen (7) wird. Die Abtastphase wird also durch Auswahl einer der n Schieberegisterzellen des Schieberegisters 2 festgelegt.

Zur Ermittlung der optimalen Abtastphase werden die Inhalte $r_0$, $r_1$,..,$r_{14}$, $r_{15}$ der jeweils ersten Zelle der Schieberegister 2, 3,..., 5 mit der Samplefrequenz $\frac{1}{T_S}$ ausgelesen und der Einheit 8 zur Ermittlung der Korrelation zugeführt.

Dort wird die Korrelation der Eingangsdatenfolge

$$\{r(k \cdot T_S - m \cdot T_{Bit})\}_{0 \leq m \leq 15} =$$

$$= \{r(k \cdot T_S),\ r(k \cdot T_S - T_{Bit}),\ \ldots,\ r(k \cdot T_S - 15 \cdot T_{Bit})\}$$

$$= \{r_0, r_1, \ldots, r_{14}, r_{15}\}$$

mit dem bekannten, beispielsweise 16 Bit langen Synchronisationswort

$$\{s(m \cdot T_{Bit})\}_{0 \leq m \leq 15} =$$

$$= \{s_0,\ s_1,\ \ldots,\ s_{14},\ s_{15}\}$$

korreliert, um zu jeder Abtastphase k einen zugehörigen Korrelationswert zu ermitteln. Zu diesem Zweck wird das Synchronisationswort RXSYNC in die hierfür vorgesehenen Speicherzellen 10 eingeschrieben (9). Als Korrelationswert dient die Hamming-Distanz d(k) zwischen der Eingangsdatenfolge einerseits und dem Synchronisationswort andererseits. Die Hamming-Distanz wird zu jedem der Zeitpunkte $k \cdot T_S$ berechnet:

$$d(k) = \sum_{m=0}^{15} s_m \oplus r_m$$

Die Hamming-Distanz gibt an, in wie vielen Bits sich die Folge der empfangenen Daten

$$\{r(k \cdot T_S - m \cdot T_{Bit})\}_{0 \leq m \leq 15}$$

und die Vergleichsfolge

$$\{s(m \cdot T_{Bit})\}_{0 \leq m \leq 15}$$

unterscheiden. Im vorliegenden Beispiel sind beide Sequenzen jeweils 16 Bit lang.

Um festzustellen, ob eine hinreichend starke Korrelation zwischen der Eingangsbitfolge und der Vergleichsfolge vorliegt, wird die Hamming-Distanz d(k) mit einem wählbaren Schwellwert $d_{max}$ verglichen. Falls $d(k) \leq d_{max}$ gilt, sind die beiden Folgen korreliert.

Zu Beginn jedes Datenbursts wird das Synchronisationswort übertragen. Es sei $k_1 \cdot T_S$ der Zeitpunkt, bei dem zum ersten Mal Korrelation vorliegt, bei dem also $d(k_1) \leq d_{max}$ gilt. Dieser Zeitpunkt wird als SYNC bezeichnet. Das zum Zeitpunkt $k_1$ gehörige Korrelationsflag $f(k_1)$ wird gesetzt:

$$f(k_1) = 1$$

Für die nachfolgenden 8 Zeitpunkte $k = k_1+1, k_1+2, ..., k_1+8$ werden jeweils die zugehörigen Hamming-Distanzen $d(k)$ ermittelt und mit $d_{max}$ verglichen. Wenn der Schwellwert $d_{max}$ unterschritten ist, wird das zugehörige Korrelationsflag gesetzt:

$$f(k) = \begin{cases} 1 \text{ für } d(k) \leq d_{max} \\ 0 \text{ für } d(k) > d_{max} \end{cases}$$

Die auf diese Weise bestimmten Korrelationsflags $f(k)$ mit $k = k_1+1, k_1+2, ..., k_1+8$ werden von der Einheit 8 zur Ermittlung der Korrelation in ein Korrelationsflag-Schieberegister 11 eingeschrieben (12). Die Vorschubrichtung des Korrelationsflag-Schieberegisters 11 ist dabei durch den Pfeil 13 gegeben.

Aus der im Schieberegister 11 gespeicherten, 9 Bit umfassenden Bitfolge der Korrelationsflags kann der optimale Abtastzeitpunkt

$$t_0 = k_0 \cdot T_S + m \cdot T_{bit}$$

bestimmt werden.

Das vor der Überabtastung vorliegende pulsamplitudenmodulierte Signal kann asymmetrisch verformt sein. In diesem Fall kann es vorteilhaft sein, den Abtastzeitpunkt dadurch an den Zeitpunkt maximaler Amplitude anzupassen, indem der Abtastzeitpunkt gegenüber dem mittigen Abtastzeitpunkt geringfügig verschoben wird. Dies kann mittels eines beliebig wählbaren zusätzlichen Zeitversatzes $k_2 \in \{-2; -1; 0; 1; 2; 3\}$ erfolgen.

Insofern gilt für den Zeitindex $k_0$

$$k_0 = k_1 + P + k_2,$$

wobei P die Samplephase und $k_2 \in \{-2; -1; 0; 1; 2; 3\}$ einen beliebig wählbaren Zeitversatz bezeichnet.

Zunächst wird der optimale Abtastzeitpunkt $t_0$ genau mittig zwischen dem Zeitpunkt beginnender Korrelation und dem Zeitpunkt letztmaliger Korrelation gewählt. Wenn $k_1$ den Index des erstmaligen Auftretens von Korrelation und $k_1+n_1$ den Index des letztmaligen Auftretens von Korrelation bezeichnet (also $f(k_1)=1$ und $f(k_1+n_1)=1$), dann ergibt sich die Samplephase P zu

$$P = \left\lfloor \frac{n_1}{2} \right\rfloor + 1.$$

Bei der in Fig. 1 gezeigten Implementierung wird das im Korrelationsflag-Schieberegister 11 gespeicherte Bitmuster mittels einer Lookup-Table LUT in die zugehörige Samplephase P umgewandelt. Das Auslesen der Lookup-Table LUT erfolgt zu dem Zeitpunkt, zu dem die ganz rechts befindliche Schieberegisterzelle des Korrelationsflag-Schieberegisters 11 zum ersten mal den Wert 1 annimmt (also zum Zeitpunkt SYNC). Der Index $n_1$ wird dann durch das letztmalige (also am weitesten links befindliche) Auftreten eines Korrelationsflags mit dem Wert "1" bestimmt. Die dazwischen liegenden, mit "X" bezeichneten Korrelationsflag-Werte sind für die Bestimmung von $n_1$ sowie P ohne Belang (sogenannte "don't care bits"). In der rechts neben der Lookup-Table LUT befindlichen Spalte sind die zu den verschiedenen Korrelationsflag-Bitfolgen gehörigen Samplephasen P angegeben.

Die Samplephase P wird dem Abtast-Halteglied 14 zugeführt und bestimmt zusammen mit den Parametern $k_0$ sowie $k_2$, zu welchem Zeitpunkt das Auslesen 7 einer bestimmten Registerzelle des Schieberegister 2 erfolgen soll. Der ausgelesene Wert wird jeweils für eine Symbolzeitdauer $T_{Bit} = 9 \cdot T_S$ gehalten, und auf diese Weise wird das gesampelte Eingangssignal $RXDA_{Sampled}$ erzeugt. Dieses Signal kann beispielsweise über eine Datenkonversionseinheit 15 einem Mikrokontroller $\mu C$ zugeführt werden.

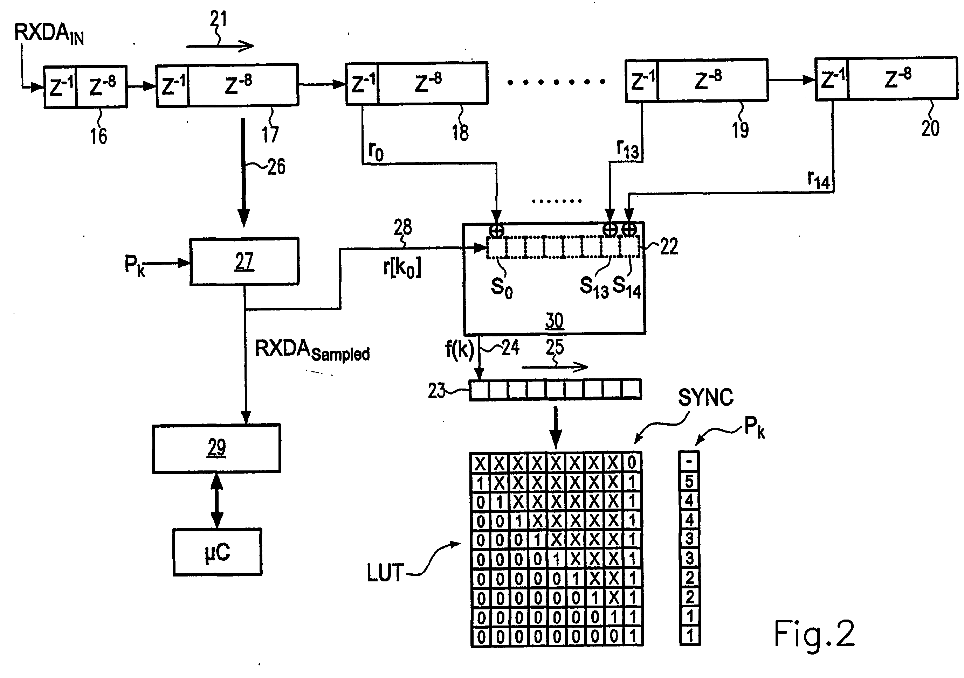

In Fig. 2 ist die erfindungsgemäße Einheit zur wiederholten Neubestimmung der Abtastphase dargestellt. Wie im Stand der Technik wird ein neunfach überabgetasteter digitaler Bitstrom $RXDA_{IN}$ in eine Folge von hintereinander geschalteten Schieberegistern 16, 17,..., 20 eingespeist. Jedes der Schieberegister 16, 17,..., 20 weist neun Speicherzellen auf und kann deshalb neun aufeinanderfolgende Abtastwerte aufnehmen. Jeweils nach Ablauf einer Samplezeit $T_S$ wird der Inhalt der Schieberegister um eine Position nach rechts weiterverschoben. Der Pfeil 21 gibt dabei die Vorschubrichtung der Schieberegister an.

Wie im Stand der Technik hat die Einheit 30 zur Ermittlung der Korrelation die Aufgabe, zu jedem Abtastzeitpunkt einen Korrelationswert zwischen der Eingangsbitfolge $\{r_0, r_1, .. , r_{14}\}$ und der Vergleichsfolge zu ermitteln. Anders als im Stand der Technik umfassen die beiden zu vergleichenden Folgen nur jeweils 15 Bits (anstelle von bisher 16 Bit). Die Vergleichsfolge $\{s_0, s_1, .. , s_{14}\}$ ist in dem Vergleichsfolge-Schieberegister 22 abgelegt. Zur erstmaligen Bestimmung der Korrelation, also zu Beginn des Empfangs eines Datenbursts, enthält das Vergleichsfolge-Schieberegister 22 die unteren 15 Bit $(s_0, s_1, .. , s_{14})$ des empfängerseitig bekannten Synchronisationsworts, das zu Beginn des Datenbursts übertragen wird.

Die Einheit 30 zur Ermittlung der Korrelation bestimmt für jeden der Zeitpunkte $k \cdot T_S$ die Hamming-Distanz $d(k)$ zwischen der Eingangsbitfolge und der Vergleichsfolge. Der Zeitpunkt $k_1 \cdot T_S$ bezeichnet den Zeitpunkt erstmaliger Korrelation, also den Zeitpunkt, zu dem zum ersten Mal $d(k_1) \leq d_{max}$ gilt. Das zugehörige Korrelationsflag $f(k_1)$ wird gleich 1 gesetzt, und dieser Wert wird in das Korrelationsflag-Schieberegister 23 eingeschrieben (24). Genau wie anhand von Fig. 1 beschrieben, werden auch zu den nachfolgenden acht Hamming-Distanzen $d(k)$ mit $k = k_1+1, k_1+2, ..., k_1+8$ die zugehörigen Korrelationsflags $f(k)$ ermittelt und in das Korrelationsflag-Schieberegister 23 eingeschrieben. Die eingeschriebenen Werte werden von links nach rechts entsprechend dem Pfeil 25 durch das Schieberegister geschoben.

Das im Korrelationsflag-Schieberegister 23 abgelegte Bitmuster kann mittels der Lookup-Table LUT in die Samplephase $P_k$ für den in der Mitte des Korrelationsintervalls liegenden optimalen Abtastzeitpunkt $t_0$ übersetzt werden. Dabei gilt

$$t_0 = k_0 \cdot T_S + m \cdot T_{Bit}$$

mit $k_0 = k_1 + P_k + k_2$, wobei $k_1$ den Zeitindex für das erstmalige Auftreten von Korrelation, $P_k$ die Samplephase und $k_2$ einen beliebig wählbaren Zeitversatz mit $k_2 \in \{- 2; - 1; 0; 1; 2; 3\}$ bezeichnet.

Die so bestimmte Abtastphase $P_k$ wird dem Abtast-Halteglied 27 zugeführt; das Auslesen 26 des nächstfolgenden Bits des Eingangsbitstroms erfolgt dann bereits zu dem durch $P_k$ festgelegten Abtastzeitpunkt. Das neu ausgelesene Bit $r[k_0]$ wird als Teil des gesampelten Eingangsbitstroms $RXDA_{Sampled}$ über die Datenkonvertiereinheit 29 dem Mikrokontroller $\mu C$ zugeführt.

Anders als im Stand der Technik wird das neu ausgelesene Bit $r[k_0]$ auch in das Vergleichsfolge-Schieberegister 22 eingespeist (Pfeil 28), so das sich folgende neue Vergleichsfolge ergibt:

$$\{r[k_0], s_0, s_1, .. , s_{13}\}$$

Das Bit $s_{14}$ des Synchronisationsworts wird durch das Einschieben von $r[k_0]$ aus dem Vergleichsfolge-Schieberegister 22 herausgeschoben.

Statt eines Vergleichs mit dem bekannten Synchronisationswort erfolgt die Bestimmung der neuen Abtastphase erfindungsgemäß durch Vergleich der Eingangssamples mit einer Vergleichsfolge, welche sich aus einer entscheidungsbasierten (Decision Directed) Auswertung des empfangenen Datenstroms ergibt. Die Entscheidung über den Wert des Datenbits $r[k_0]$ wird durch Auslesen (26) des Eingangsdatenstroms mit der bisherigen Abtastphase $P_k$ getroffen.

Die neue Abtastphase $P_{k+1}$ wird dann anhand einer modifizierten Vergleichsfolge ermittelt, welche basierend auf der Entscheidung über $r[k_0]$ generiert wird. Die Bestimmung der neuen Abtastphase $P_{k+1}$ erfolgt durch Korrelation des Eingangsdatenstroms mit der neuen Vergleichsfolge $\{r[k_0], s_0, s_1, .. , s_{13}\}$.

Im Unterschied zum Stand der Technik wird das Bit $r_0$ nicht mehr aus dem Schieberegister 17, sondern aus dem Schieberegister 18 ausgelesen. Dadurch ergibt sich eine gewisse zeitliche Verzögerung zwischen dem Auslesen 26 des für die Vergleichsfolge benötigten Bit $r[k_0]$ einerseits und dem Auslesen des Bits $r_0$ aus dem Eingangsdatenstrom, so dass der Wert von $r[k_0]$, der für die Vergleichsfolge benötigt wird, beim Eintreffen von $r_0$ bereits zur Verfügung steht. Wegen dieses Zeitversatzes kann bei der erfindungsgemäßen Lösung das volle Abtastzeitintervall von beginnender zu nachlassender Korrelation zwischen Eingangs- und Vergleichsfolge durchlaufen werden. Dabei ist es von Vorteil, wenn das Vergleichsfolge-Schieberegister 22 jeweils zu den Zeitpunkten $k_1 + m \cdot T_{Bit}$ mit Null gefüllt wird, denn auf diese Weise kann das Einsetzen der Korrelation besser verfolgt werden.

Die neu bestimmte Abtastphase $P_{k+1}$ wird dem Abtast-Halteglied 27 zugeführt. Das nächste Eingangsbit kann dann bereits mit der neuen Abtastphase $P_{k+1}$ ausgelesen (26) werden.

Um zu vermeiden, dass die Nachregelung zum Beispiel durch stark gestörte Datenbits immer wieder fehlerhafte Vergleichsmuster erhält und damit die neubestimmten Abtastphasen immer wieder fehlerhaft sind, soll eine Nachregelung der Abtastphase $P_{k+1}$ nur innerhalb eines bestimmten Bereichs um die anfangs bestimmte Abtastphase $P_{initial}$ erlaubt werden.

Es kann auch vorgesehen sein, dass die Abweichungen der neu bestimmten Abtastphasen von der anfangs bestimmten Abtastphase $P_{initial}$ über einen bestimmten Zeitraum aufsummiert werden und eine Nachregelung erst dann ausgeführt wird, wenn die aufsummierte Abweichung eine bestimmte Schwelle überschreitet. Durch diese Maßnahme kann eine verbesserte Robustheit der Regelung erzielt werden.

Die Erfindung ermöglicht eine kontinuierliche Nachregelung der Abtastphase $P_k$ und stellt damit sicher, dass die einzelnen ankommenden Datensymbole jeweils in der Mitte abgetastet werden. Dadurch wird die Entscheidung für die einzelnen Datenbits verbessert, die Bitfehlerrate wird reduziert. Insbesondere führt eine Signalstörung zu Beginn des Datenbursts, also bei der Übertragung des Synchronisationsworts, nicht mehr zu einer fehlerhaften Abtastung des gesamten ankommenden Datenbursts. Eine eventuelle Drift der Zeitreferenzen von Sender und Empfänger kann durch die erfindungsgemäße Nachführung der Abtastphase kompensiert werden.

## Patentansprüche

1. Vorrichtung zur Ermittlung des optimalen Abtastzeitpunkts für einen überabgetasteten digitalen Bitstrom (RXDA$_{IN}$), wobei pro Bit zu n verschiedenen Abtastzeitpunkten aufgenommene binäre Abtastwerte vorliegen, mit

    - einer Folge von Schieberegistern (18, 19, 20) mit jeweils n Registerzellen, durch die der überabgetastete digitale Bitstrom im Abtasttakt geschoben wird,
    - einer Ausleseeinheit, welche aus dem überabgetasteten digitalen Bitstrom (RXDA$_{IN}$) jeweils zum optimalen Abtastzeitpunkt ($t_0$) das nächstfolgende Bit ($r[k_0]$) ausliest,
    - einer Einheit (30) zur Ermittlung der Korrelation zwischen den Bits aus jeweils einer Registerzelle der Schieberegister aus der Folge von Schieberegistern (18, 19, 20) und einer Vergleichsfolge, wobei als Vergleichsfolge ein durchlaufendes Bitmuster verwendet wird, in das jeweils das zum optimalen Abtastzeitpunkt ($t_0$) ausgelesene Bit ($r[k_0]$) eingespeist wird, und
    - einer Einheit zur Bestimmung des neuen optimalen Abtastzeitpunkts aus den zu den verschiedenen Abtastzeitpunkten ermittelten Korrelationswerten.

2. Vorrichtung nach Anspruch 1,
   **dadurch gekennzeichnet,**
   **dass** die Vergleichsfolge in einem Vergleichsfolge-Schieberegister (22) abgelegt ist, wobei in das Vergleichsfolge-Schieberegister (22) jeweils das zum optimalen Abtastzeitpunkt ($t_0$) ausgelesene Bit ($r[k_0]$) eingespeist wird.

3. Vorrichtung nach einem der vorhergehenden Ansprüche,
   **dadurch gekennzeichnet,**
   **dass** der optimale Abtastzeitpunkt ($t_0$) mehrmals während eines Datenbursts bestimmt wird.

4. Vorrichtung nach Anspruch 3,
   **dadurch gekennzeichnet,**
   **dass** der optimale Abtastzeitpunkt ($t_0$) mehrmals während eines Datenbursts in periodischen Abständen bestimmt wird.

5. Vorrichtung nach einem der vorhergehenden Ansprüche,
   **dadurch gekennzeichnet,**
   **dass** jeweils zu Beginn des Empfangs eines Datenbursts die Vergleichsfolge gleich einem Synchronisationswort gesetzt wird.

6. Vorrichtung nach einem der vorhergehenden Ansprüche,
   **dadurch gekennzeichnet,**
   **dass** eine Variation des optimalen Abtastzeitpunkts ($t_0$) nur innerhalb eines vorgegebenen Intervalls um den bisherigen optimalen Abtastzeitpunkt erfolgt.

7. Vorrichtung nach einem der vorhergehenden Ansprüche,
   **dadurch gekennzeichnet,**

**dass** die Einheit (30) zur Ermittlung der Korrelation jeweils die Hamming-Distanz (d(k)) zwischen der zu einem bestimmten Abtastzeitpunkt gehörigen Folge von abgetasteten Datenbits und der Vergleichsfolge bestimmt.

8. Vorrichtung nach Anspruch 7,
**dadurch gekennzeichnet,**
**dass** die Einheit (30) zur Ermittlung der Korrelation die jeweils ermittelte Hamming-Distanz (d(k)) mit einem vorgegebenen Schwellwert ($d_{max}$) vergleicht und für den Fall, dass der Schwellwert ($d_{max}$) unterschritten ist, ein zugehöriges Korrelationsflag (f(k)) setzt.

9. Vorrichtung nach einem der Ansprüche 7 oder 8,
**dadurch gekennzeichnet,**
**dass** die Einheit zur Bestimmung des neuen optimalen Abtastzeitpunkts den neuen optimalen Abtastzeitpunkt ($t_0$) durch Betrachtung des Abtastzeitintervalls ermittelt, innerhalb dessen die Hamming-Distanz (d(k)) den vorgegebenen Schwellwert ($d_{max}$) unterschreitet.

10. Vorrichtung nach Anspruch 9,
**dadurch gekennzeichnet,**
**dass** die Einheit zur Bestimmung des neuen optimalen Abtastzeitpunkts den neuen optimalen Abtastzeitpunkt ($t_0$) durch Betrachtung des Abtastzeitintervalls ermittelt, innerhalb dessen die Hamming-Distanz (d(k)) den vorgegebenen Schwellwert ($d_{max}$) unterschreitet, wobei ein in der Mitte des Abtastzeitintervalls befindlicher Zeitpunkt als neuer optimaler Abtastzeitpunkt ($t_0$) gewählt wird.

11. Verfahren zur Ermittlung und Nachführung des optimalen Abtastzeitpunkts für einen überabgetasteten digitalen Bitstrom ($RXDA_{IN}$), wobei pro Bit zu n verschiedenen Abtastzeitpunkten aufgenommene binäre Abtastwerte vorliegen,
mit den folgenden Schritten:

a) Auslesen des nächstfolgenden Bits aus dem überabgetasteten digitalen Bitstrom ($RXDA_{IN}$) zum bisherigen optimalen Abtastzeitpunkt, wobei der überabgetastete digitale Bitstrom ($RXDA_{IN}$) durch eine Folge von Schieberegistern (18, 19, 20) geschoben wird, wobei jedes Schieberegister (18, 19, 20) n Registerzellen zur Aufnahme der n pro Bit vorhandenen Abtastwerte aufweist;
b) Einspeisen des zum bisherigen optimalen Abtastzeitpunkt ausgelesenen Bit ($r[k_0]$) in die Vergleichsfolge, welche als durchlaufendes Bitmuster abgelegt ist;
c) Ermitteln der Korrelation zwischen den Bits aus jeweils einer Registerzelle der Schieberegister aus der Folge von Schieberegistern und der Vergleichsfolge, wobei zu jedem Abtastzeitpunkt ein zugehöriger Korrelationswert ermittelt wird;
d) Bestimmen eines neuen optimalen Abtastzeitpunkts ($t_0$) aus den zu den verschiedenen Abtastzeitpunkten ermittelten Korrelationswerten.

12. Verfahren nach Anspruch 11,
**dadurch gekennzeichnet,**
**dass** die Vergleichsfolge in einem Vergleichsfolge-Schieberegister (22) abgelegt wird, wobei in das Vergleichsfolge-Schieberegister (22) jeweils das zum optimalen Abtastzeitpunkt ausgelesene Bit ($r[k_0]$) eingespeist wird.

13. Verfahren nach einem der Ansprüche 11 bis 12,
**dadurch gekennzeichnet,**
**dass** der optimale Abtastzeitpunkt ($t_0$) mehrmals während eines Datenbursts bestimmt wird.

14. Verfahren nach Anspruch 13,
**dadurch gekennzeichnet,**
**dass** der optimale Abtastzeitpunkt ($t_0$) mehrmals während eines Datenbursts in periodischen Abständen bestimmt wird.

15. Verfahren nach einem der Ansprüche 11 bis 14,
**dadurch gekennzeichnet,**
**dass** jeweils zu Beginn des Empfangs eines Datenbursts die Vergleichsfolge gleich einem Synchronisationswort gesetzt wird.

**16.** Verfahren nach einem der Ansprüche 11 bis 15,
**dadurch gekennzeichnet,**
**dass** sich der neue optimale Abtastzeitpunkt ($t_0$) innerhalb eines vorgegebenen Intervalls um den bisherigen optimalen Abtastzeitpunkt befindet.

**17.** Verfahren nach einem der Ansprüche 11 bis 16,
**dadurch gekennzeichnet,**
**dass** zur Ermittlung der Korrelation die jeweilige Hamming-Distanz ($d(k)$) zwischen der zu einem bestimmten Abtastzeitpunkt gehörigen Folge von abgetasteten Datenbits und der Vergleichsfolge bestimmt wird.

**18.** Verfahren nach Anspruch 17,
**dadurch gekennzeichnet,**
**dass** zur Ermittlung der Korrelation die jeweilige zu einem bestimmten Abtastzeitpunkt gehörige Hamming-Distanz ($d(k)$) mit einem vorgegebenen Schwellwert ($d_{max}$) verglichen wird, wobei für den Fall, dass der Schwellwert ($d_{max}$) unterschritten ist, ein Korrelationsflag ($f(k)$) gesetzt wird.

**19.** Verfahren nach Anspruch 17 oder 18,
**dadurch gekennzeichnet,**
**dass** zur Ermittlung des optimalen Abtastzeitpunkts ($t_0$) das Abtastzeitintervall betrachtet wird, innerhalb dessen die Hamming-Distanz ($d(k)$) den vorgegebenen Schwellwert ($d_{max}$) unterschreitet.

**20.** Verfahren nach Anspruch 19,
**dadurch gekennzeichnet,**
**dass** ein in der Mitte des Abtastzeitintervalls, innerhalb dessen die Hamming-Distanz ($d(k)$) den vorgegebenen Schwellwert ($d_{max}$) unterschreitet, befindlicher Zeitpunkt als neuer optimaler Abtastzeitpunkt ($t_0$) gewählt wird.

**Claims**

**1.** Apparatus for ascertaining the optimum sampling time for an oversampled digital bit stream ($RXDA_{IN}$), where binary samples taken at n different sampling times are available for each bit, having the oversampled digital bit stream in the sampling clock, a sequence of shift registers (18, 19, 20) with n respective register cells which shift

- a reading unit which reads the next bit ($r[k_0]$) from the oversampled digital bit stream ($RXDA_{IN}$) at the optimum sampling time ($t_0$) in each case,
- a unit (30) for ascertaining the correlation between the bits from a respective register cell in the shift registers from the sequence of shift registers (18, 19, 20) and a comparative sequence, the comparative sequence used being a continuous bit pattern into which the respective bit ($r[k_0]$) read at the optimum sampling time ($t_0$) is fed, and
- a unit for determining the new optimum sampling time from the correlation values ascertained at the various sampling times.

**2.** Apparatus according to Claim 1,
**characterized**
**in that** the comparative sequence is stored in a comparative-sequence shift register (22), with the respective bit ($r[k_0]$) read at the optimum sampling time ($t_0$) being fed into the comparative-sequence shift register (22).

**3.** Apparatus according to one of the preceding claims,
**characterized**
**in that** the optimum sampling time ($t_0$) is determined a plurality of times during a data burst.

**4.** Apparatus according to Claim 3,
**characterized**
**in that** the optimum sampling time ($t_0$) is determined a plurality of times during a data burst at cyclic intervals.

**5.** Apparatus according to one of the preceding claims,
**characterized**
**in that** the comparative sequence is equated to a synchronization word at each start of reception of a data burst.

**6.** Apparatus according to one of the preceding claims,
**characterized**
**in that** the optimum sampling time ($t_0$) is varied only within a prescribed range around the previous optimum sampling time.

**7.** Apparatus according to one of the preceding claims,
**characterized**
**in that** the unit (30) for ascertaining the correlation respectively determines the hamming distance ($d(k)$) between the sequence of sampled data bits which is associated with a particular sampling time and the comparative sequence.

**8.** Apparatus according to Claim 7,
**characterized**
**in that** the unit (30) for ascertaining the correlation compares the respective hamming distance ($d(k)$) ascertained with a prescribed threshold value ($d_{max}$) and, if said hamming distance is below the threshold value ($d_{max}$), sets an associated correlation flag ($f(k)$).

**9.** Apparatus according to one of Claims 7 or 8,
**characterized**
**in that** the unit for determining the new optimum sampling time ascertains the new optimum sampling time ($t_0$) by considering the sampling-time range within which the hamming distance ($d(k)$) is below the prescribed threshold value ($d_{max}$).

**10.** Apparatus according to Claim 9,
**characterized**
**in that** the unit for determining the new optimum sampling time ascertains the new optimum sampling time ($t_0$) by considering the sampling-time range within which the hamming distance ($d(k)$) is below the prescribed threshold value ($d_{max}$), with a time which is in the center of the sampling-time range being chosen as the new optimum sampling time ($t_0$).

**11.** Method for ascertaining and correcting the optimum sampling time for an oversampled digital bit stream ($RXDA_{IN}$), where binary samples taken at n different sampling times are available for each bit, having the following steps:

a) the next bit is read from the oversampled digital bit stream ($RXDA_{IN}$) at the previous optimum sampling time, the oversampled digital bit stream ($RDXA_{IN}$) being shifted by a sequence of shift registers (18, 19, 20), each shift register (18, 19, 20) having n register cells for holding the n samples available for each bit;
b) the bit ($r[k_0]$) read at the previous optimum sampling time is fed into the comparative sequence, which is stored as a continuous bit pattern;
c) the correlation between the bits from a respective register cell in the shift registers from the sequence of shift registers and the comparative sequence is ascertained, with an associated correlation value being ascertained at each sampling time;
d) a new optimum sampling time ($t_0$) is determined from the correlation values ascertained at the various sampling times.

**12.** Method according to Claim 11,
**characterized**
**in that** the comparative sequence is stored in a comparative-sequence shift register (22), with the respective bit ($r[k_0]$) read at the optimum sampling time being fed into the comparative-sequence shift register (22).

**13.** Method according to one of Claims 11 to 12,
**characterized**
**in that** the optimum sampling time ($t_0$) is determined a plurality of times during a data burst.

**14.** Method according to Claim 13,
**characterized**
**in that** the optimum sampling time ($t_0$) is determined a plurality of times during a data burst at cyclic intervals.

**15.** Method according to one of Claims 11 to 14,

**characterized**

**in that** the comparative sequence is equated to a synchronization word at each start of reception of a data burst.

16. Method according to one of Claims 11 to 15,
    **characterized**
    **in that** the new optimum sampling time ($t_0$) is situated within a prescribed range around the previous optimum sampling time.

17. Method according to one of Claims 11 to 16,
    **characterized**
    **in that** the correlation is ascertained by determining the respective hamming distance ($d(k)$) between the sequence of sampled data bits which is associated with a particular sampling time and the comparative sequence.

18. Method according to Claim 17,
    **characterized**
    **in that** the correlation is ascertained by comparing the respective hamming distance ($d(k)$) associated with a particular sampling time with a prescribed threshold value ($d_{max}$), and, if said hamming distance is below the threshold value ($d_{max}$), by setting a correlation flag ($f(k)$).

19. Method according to Claim 17 or 18,
    **characterized**
    **in that** the optimum sampling time ($t_0$) is ascertained by considering the sampling-time range within which the hamming distance ($d(k)$) is below the prescribed threshold value ($d_{max}$).

20. Method according to Claim 19,
    **characterized**
    **in that** a time which is in the center of the sampling-time range within which the hamming distance ($d(k)$) is below the prescribed threshold value ($d_{max}$) is chosen as the new optimum sampling time ($t_0$).

**Revendications**

1. Dispositif de détermination de l'instant d'échantillonnage optimal pour un flux de bits numérique suréchantillonné ($RXDA_{IN}$), des valeurs échantillonnées binaires prélevées à n instants d'échantillonnage différents existant pour chaque bit, comportant

   - une suite de registres à décalage (18, 19, 20) avec chacun n cellules de registre à travers lesquelles le flux de bits numérique suréchantillonné est décalé suivant la fréquence d'échantillonnage,
   - une unité de lecture qui lit le bit suivant ($r [k_0]$), à chaque fois à l'instant d'échantillonnage optimal ($t_0$), dans le flux de bits numérique suréchantillonné ($RXDA_{IN}$),
   - une unité (30) pour déterminer la corrélation entre les bits à chaque fois d'une cellule de registre des registres à décalage de la suite de registres à décalage (18, 19, 20) et d'une suite de comparaison, un modèle de bits continu dans lequel est introduit à chaque fois le bit ($r [k_0]$) lu à l'instant d' échantillonnage optimal ($t_0$) étant utilisé comme suite de comparaison, et
   - une unité pour déterminer le nouvel instant d'échantillonnage à partir des valeurs de corrélation déterminées aux différents instants d'échantillonnage.

2. Dispositif selon la revendication 1,
   **caractérisé par le fait que** la suite de comparaison est enregistrée dans un registre à décalage de suite de comparaison (22), le bit ($r [k_0]$) lu à l'instant d'échantillonnage optimal ($t_0$) étant introduit à chaque fois dans le registre à décalage de suite de comparaison (22).

3. Dispositif selon l'une des revendications précédentes,
   **caractérisé par le fait que** l'instant d'échantillonnage optimal ($t_0$) est déterminé plusieurs fois pendant une salve de données.

4. Dispositif selon la revendication 3,
   **caractérisé par le fait que** l'instant d'échantillonnage optimal ($t_0$) est déterminé plusieurs fois pendant une salve de données à des intervalles périodiques.

**5.** Dispositif selon l'une des revendications précédentes,
**caractérisé par le fait que**, à chaque début de réception d'une salve de données, la suite de comparaison est posée égale à un mot de synchronisation.

**6.** Dispositif selon l'une des revendications précédentes,
**caractérisé par le fait qu'**une variation de l'instant d'échantillonnage optimal ($t_0$) ne s'effectue qu'à l'intérieur d'un intervalle prédéterminé autour de l'instant d'échantillonnage optimal en vigueur jusque là.

**7.** Dispositif selon l'une des revendications précédentes,
**caractérisé par le fait que** l'unité (30) pour la détermination de la corrélation détermine à chaque fois la distance de Hamming (d (k)) entre la suite, associée à un certain instant d'échantillonnage, de bits de données échantillonnés et la suite de comparaison.

**8.** Dispositif selon la revendication 7,
**caractérisé par le fait que** l'unité (30) pour la détermination de la corrélation compare la distance de Hamming respectivement déterminée (d (k)) à une valeur de seuil prescrite ($d_{max}$) et que, si la distance est inférieure à la valeur de seuil ($d_{max}$), un drapeau de corrélation associé (f (k)) est affecté.

**9.** Dispositif selon l'une des revendications 7 ou 8,
**caractérisé par le fait que** l'unité pour la détermination du nouvel instant d'échantillonnage optimal détermine le nouvel instant d'échantillonnage optimal ($t_0$) en considérant l'intervalle de temps d'échantillonnage à l'intérieur duquel la distance de Hamming (d (k)) est inférieure à la valeur de seuil prescrite ($d_{max}$).

**10.** Dispositif selon la revendication 9,
**caractérisé par le fait que** l'unité pour la détermination du nouvel instant d'échantillonnage optimal détermine le nouvel instant d'échantillonnage optimal ($t_0$) en considérant l'intervalle de temps d'échantillonnage à l'intérieur duquel la distance de Hamming (d (k)) est inférieure à la valeur de seuil prescrite ($d_{max}$), un instant situé au milieu de l'intervalle de temps d'échantillonnage étant choisi comme nouvel instant d'échantillonnage optimal ($t_0$).

**11.** Procédé de détermination et d'ajustement de l'instant d'échantillonnage optimal pour un flux de bits numérique suréchantillonné ($RXDA_{IN}$), des valeurs échantillonnées binaires prélevées à n instants d'échantillonnage différents existant pour chaque bit, avec les étapes suivantes :

a) lecture du bit suivant dans le flux de bits numérique suréchantillonné ($RXDA_{IN}$) à l'instant d'échantillonnage optimal en vigueur jusque là, le flux de bits numérique suréchantillonné ($RXDA_{IN}$) étant décalé à travers une suite de registres à décalage (18, 19, 20), chaque registre à décalage (18, 19, 20) comportant n cellules de registre pour l'enregistrement des n valeurs échantillonnées présentes par bit ;
b) introduction du bit (r [$k_0$]) lu à l'instant d'échantillonnage optimal en vigueur jusque là dans la suite de comparaison qui est enregistrée comme modèle de bits continu ;
c) détermination de la corrélation entre les bits à chaque fois d'une cellule de registre des registres à décalage de la suite de registres à décalage et de la suite de comparaison, une valeur de corrélation associée étant déterminée pour chaque instant d'échantillonnage ;
d) détermination d'un nouvel instant d'échantillonnage optimal ($t_0$) à partir des valeurs de corrélation déterminées aux différents instants d'échantillonnage.

**12.** Procédé selon la revendication 11,
**caractérisé par le fait que** la suite de comparaison est enregistrée dans un registre à décalage de suite de comparaison (22), le bit (r [$k_0$]) lu à l'instant d'échantillonnage optimal étant introduit à chaque fois dans le registre à décalage de suite de comparaison (22).

**13.** Procédé selon l'une des revendications 11 à 12,
**caractérisé par le fait que** l'instant d'échantillonnage optimal ($t_0$) est déterminé plusieurs fois pendant une salve de données.

**14.** Procédé selon la revendication 13,
**caractérisé par le fait que** l'instant d'échantillonnage optimal ($t_0$) est déterminé plusieurs fois pendant une salve de données à des intervalles périodiques.

15. Procédé selon l'une des revendications 11 à 14,
   **caractérisé par le fait que**, à chaque début de réception d'une salve de données, la suite de comparaison est posée égale à un mot de synchronisation.

16. Procédé selon l'une des revendications 11 à 15,
   **caractérisé par le fait que** le nouvel instant d'échantillonnage optimal ($t_0$) se trouve à l'intérieur d'un intervalle prédéterminé autour de l'instant d'échantillonnage optimal en vigueur jusque là.

17. Procédé selon l'une des revendications 11 à 16,
   **caractérisé par le fait que**, pour la détermination de la corrélation, on détermine la distance de Hamming respective ($d(k)$) entre la suite, associée à un certain instant d'échantillonnage, de bits de données échantillonnés et la suite de comparaison.

18. Procédé selon la revendication 17,
   **caractérisé par le fait que**, pour la détermination de la corrélation, on compare la distance de Hamming respective ($d(k)$), associée à un certain instant d'échantillonnage, à une valeur de seuil prescrite ($d_{max}$) et que, si la distance est inférieure à la valeur de seuil ($d_{max}$), on affecte un drapeau de corrélation associé ($f(k)$).

19. Procédé selon l'une des revendications 17 ou 18,
   **caractérisé par le fait que**, pour la détermination de l'instant d'échantillonnage optimal ($t_0$), on considère l'intervalle de temps d'échantillonnage à l'intérieur duquel la distance de Hamming ($d(k)$) est inférieure à la valeur de seuil prescrite ($d_{max}$).

20. Procédé selon la revendication 19,
   **caractérisé par le fait que** l'on choisit comme nouvel instant d'échantillonnage optimal ($t_0$) un instant situé au milieu de l'intervalle de temps d'échantillonnage à l'intérieur duquel la distance de Hamming ($d(k)$) est inférieure à la valeur de seuil prescrite ($d_{max}$).

Fig. 1
Stand der Technik

Fig.2

EP 1 360 792 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5699389 A